# EUROPEAN PATENT SPECIFICATION

(11) **EP 2 807 017 B1**
(45) Date of publication and mention of the grant of the patent: **19.03.2025**
(21) Application number: 13714532.2
(22) Date of filing: 25.01.2013
(51) Int. Cl.: B29C 70/20, B29C 70/46, B29C 70/54, B29B 15/12, B29B 11/16, B29C 70/50

(54) **PROCESS FOR MAKING A PREPREG**
VERFAHREN ZUR HERSTELLUNG EINES PREPREGS
PROCÉDÉ DE FABRICATION D'UN PREPREG

(30) Priority: 25.01.2012 AT 902012; 18.04.2012 AT 501362012
(43) Date of publication of application: 03.12.2014
(73) Proprietor: Hexcel Holding GmbH, 4061 Pasching (AT)
(72) Inventor: PERILLAT-COLLOMB, Pascal, 01120 Dagneux (FR); KARNER, Uwe, 4040 Linz (AT); POLS, Ronald, Maarten, Skillington (GB); MOSER, Johannes, 4040 Linz (AT)
(74) Representative: TLIP Limited
(86) International application number: PCT/AT2013/050023
(87) International publication number: WO 2013/110111

(56) References cited:
- EP-A2- 1 338 406
- DE-U1- 20 201 902
- DE-U1- 20 201 902
- US-A- 6 139 942

## Description

The present invention relates to fibre reinforced materials comprising fibres and thermosetting resins and in particular to materials that are produced by stacking layers comprising reinforcing fibre and a curable resin and subsequently curing the resin within the stack to provide an integral laminar structure of several fibre reinforcing layers encapsulated by the cured resin. Such laminar structures are strong and light-weight and are well known and find many uses in industrial applications such as automotive, aerospace and marine applications and also in wind turbine structures such as the shells used for turbine blade production, the spars and the root ends of the spars. They are also used for sporting goods such as for skis, skate boards, surf boards, windsurfers and the like.

The fibrous material employed may be tows or woven or non-woven fabrics and will be chosen according to the final use and desired properties of the laminate. This invention is particularly concerned with systems in which the reinforcing fibre consists of unidirectional multifilament tows such as a plurality of substantially parallel tows and each tow comprises a multitude of individual substantially parallel filaments. Examples of fibrous materials that may be used include glass fibre, carbon fibre and Aramid. Similarly the thermosetting resin that is used may depend upon the use to which the laminate is to be put and the properties required. Examples of suitable thermosetting resins include polyurethane resins and epoxy resins. This invention is particularly concerned with systems employing thermosetting liquid epoxy resins.

Moulding materials comprising mixtures of fibrous material and thermosetting resins are sometimes known as prepregs and can be prepared by impregnating the fibrous material with the resin in liquid form. Some resins are liquid at ambient temperature and impregnation can therefore be achieved at ambient temperature. However, usually it is preferred to heat the resin to reduce its viscosity to aid impregnation. Other resins are semi-solid or solid at ambient temperature and are melted to enable impregnation of the fibrous material with a liquid resin.

The impregnation of the fibrous material may be achieved by depositing the resin on a backing layer for example, by passing the backing layer through a bath of the liquid resin and coating the resin on the backing layer by means of a doctor blade. The surface of the backing layer carrying the resin may then be brought into contact with the fibrous material and be pressed into the fibrous layer to achieve impregnation of the fibrous layer with the resin. Alternatively a moving film of resin may be brought into contact with a moving backing layer and then brought into contact with a fibrous layer in a pair of heated nip rollers. In most previous applications it is preferred to employ two layers of resin one on each side of the fibrous layer to produce a sandwich structure to which pressure is applied to cause the resin to flow into the fibrous layer to fully impregnate the layer to form a conventional prepreg, so that the layer largely contains fibers which are fully embedded in resin and no air remains in the layer. These prepregs have a resin content in the prepreg ranging from 25 to 45% by weight of the prepreg. In highly stressed components the void content of laminates formed from prepreg moulding materials is significant for the performance, as each void is a potential point of defect which decreases the mechanical properties. For this reason, customers of prepregs require prepregs which produce low, reproducible void content, but which at the same time have good handling properties.

Air can be trapped during the manufacture of the prepreg moulding material and during the lay up in the mould of multiple prepreg layers in a multilayer stack which forms the moulding.

The impregnation of the fibrous material with the liquid resin as previously described can introduce some air into the prepreg assembly of the fibrous layer and the resin during impregnation of the fibrous reinforcement unless this process is very carefully controlled. Air which is trapped during the manufacture of the prepreg assembly is difficult to remove once the prepreg is laid up to form the moulding and the moulding is processed whereby the thermosetting resin begins to cure. When the fibrous material comprises unidirectional multifilament tows the air may be within the tows themselves or in the interstices between the tows. The presence of such air in the prepreg invariably results in voids in the final laminate. It is therefore important to minimise the formation of air bubbles within the resin fibre assembly during and after impregnation and prior to the onset of curing of the resin.

Air also tends to be captured between layers of prepregs due to their tacky surfaces. It has been customary to process the lay-up of prepregs under vacuum (usually in a vacuum bag or autoclave) to remove air from laminate stacks. Generally, it has not been possible to completely remove trapped interlaminar air and intralaminar air (air within a single layer of prepreg) from conventional prepregs and to manufacture laminates which have uniform properties across the length and breadth of the laminate,

EP 1 595 689 discloses a prepreg assembly which comprises a fibrous reinforcement and a heat curable resin, wherein the resin impregnates the fibrous reinforcement. A scrim is adhered to the outer surface of a conventional, fully impregnated prepreg such that the scrim is impressed onto the prepreg to such a degree that less than half of the circumference of the scrim strands become coated by the prepreg resin. This material has the disadvantage that the quality of the cured laminate moulding depends on the quality of impregnation of the fibrous reinforcement, as the scrim cannot remove all of the entrapped intralaminar air. Also, we have discovered that for large laminate stacks, typically of over 20 individual prepreg plies, this material is less effective in the removal of interlaminar air and intralaminar air.

PCT Publication WO 00/27632 is concerned with avoiding air becoming trapped either within a layer of moulding material (a prepreg) or between adjacent layers particularly when heavy weight glass fibre such as 1200 g/m² unidirectional tape is used as the fibrous reinforcement. The solution provided by WO 00/27632 is to provide a multi-layered moulding material which may be a prepreg comprising a layer of resin material conjoined to at least one surface of a fibrous layer. According to one embodiment the fibrous layer may be partially impregnated by the resin layer. This material has the disadvantage that it is inherently unstable. If the material is stored for any length of time prior to its lay up in the mould, the liquid resin migrates into the fibrous material which in turn results in loss of the air removal properties of the material as dry areas of the fibrous material are saturated with resin. Also, we have discovered that for large laminate stacks, typically of over 20 individual prepreg plies, this material is less effective in the removal of inter- and intralaminar air.

United States Patent 5,756,206 relates to flexible low bulk pre-impregnated tows produced by powder coating techniques. Powder is applied to a tow and partially melted to adhere to the tow to provide a discontinuous coating on the tow which helps the air in the core of the towpreg to escape while consolidating the towpregs into composite parts. This material has the disadvantage that it is very labourious to manufacture large mouldings and therefore uneconomic to lay up large composite parts using individual tows. Also, this material is unstable regarding the resin to reinforcement ratio, as the resin to reinforcement ratio is distorted as the material is handled. Furthermore, during handling and storage, the resin further impregnates the tows which results in loss of air venting capabilities of the material. EP1338406A2 discloses a further relevant prior art with a prepreg which is free from the phenomenon that air is trapped between layers to generate voids.

The present invention aims to obviate or at least mitigate the above described problems and/or to provide improvements generally.

According to the invention, there is provided a process as defined in any one of the accompanying claims.

The present invention is particularly useful in applications where a final laminate is obtained from a stack of a plurality of layers comprising fibre and thermosetting resins such as a stack containing at least 20 such layers. The invention is directed to minimising the presence of voids due to air entrapped within the prepregs and also to air entrapped between the stacked prepregs.

Accordingly, the present invention provides a process according to claim 1.

There is disclosed herein a moulding material or structure comprising a layer of fibrous reinforcement and a curable liquid resin wherein the fibrous reinforcement comprises a plurality of tows each tow comprising a plurality of filaments wherein resin is provided at least partially between interstices between tows of the fibrous reinforcement to provide an air venting path in at least the interior of the tows. The interior of the tows is at least partially resin free to provide an air venting path to allow air to be removed during processing of the material or structure.

In the disclosure, the moulding material or structure may comprise tows of fibrous reinforcement material which provide the air venting paths. The tows are structural of reinforcement fibers so in effect, they serve multiple purposes: on the one hand they provide air venting paths, and on the other hand, they provide structural reinforcement. This has the important advantage that no material is added to or included in the moulding material to solely provide the air venting function.

The intersticial resin ensures that the material has adequate structure at room temperature to allow handling of the material. This is achieved because at room temperature (23 °C), the resin has a relatively high viscosity, typically in the range of from 1000 to 100,000 Pa.s, more typically in the range of from 5000 Pa.s to 500,000 Pa.s. Also, the resin may be tacky. Tack is a measure of the adhesion of a prepreg to a tool surface or to other prepreg plies in an assembly. Tack may be measured in relation to the resin itself or in relation to the prepreg in accordance with the method as disclosed in "Experimental analysis of prepreg tack", Dubois etal, (LaMI)UBP/IFMA, 5 March 2009. This publication discloses that tack can be measured objectively and repeatably by using the equipment as described therein and by measuring the maximum debonding force for a probe which is brought in contact with the resin or prepreg at an initial pressure of 30N at a constant temperature of 30°C and which is subsequently displaced at a rate of 5 mm/min. For these probe contact parameters, the tack F/F_{ref} for the resin is in the range of from 0.1 to 0.6 where F_{ref} = 28.19N and F is the maximum debonding force. For a prepreg, the tack F/F_{ref} is in the range of from 0.1 to 0.45 for F/F_{ref} where F_{ref} = 28.19N and F is the maximum debonding force. However, a fibrous support web, grid or scrim may also be located on at least one exterior surface of the fibrous reinforcement to further enhance the integrity of the material or structure during handling, storage and processing.

The material or structure is formed from two or more separate layers of fibrous reinforcement, one layer being substantially impregnated with resin and the other layer being substantially unimpregnated, the two layers being conjoined so that resin is present between the interstices of the tows. Preferably the layers are conjoined so that the substantially unimpregnated tows are at least partially embedded among impregnated tows. The layers comprise unidirectional tows, the tows of each layer being substantially parallel. The two layers may be conjoined by compression so that the unidirectional tows are all in the same plane or substantially in the same plane. One or more additional fibrous layers may also be combined with the conjoined layers.

In the disclosure, the impregnated and unimpregnated tows may be co-located to form a single plane of fibrous reinforcement. The longitudinal axes of the impregnated and unimpregnated tows in a layer or sheet of the fibrous reinforcement may be parallel to one another and their axes may all be located in a single plane.

In the disclosure, the material or structure may comprise conjoined layers of impregnated and unimpregnated tows, the longitudinal axes of the impregnated and impregnated tows being located in the same plane.

In the disclosure, the material or structure may comprise conjoined layers of impregnated and unimpregnated tows, the material comprising between 10 to 70% of dry tows, preferably from 20 to 60% of dry tows and more preferably from 30 to 50% of dry tows, most preferably from 33 to 50% of dry tows. The material or structure may further comprise one or more scrims as herein described.

The material or structure may have a resin impregnation concentration ranging from 20 to 50% by weight, preferably from 30 to 40% by weight and more preferably from 32 to 38% by weight of the material or structure.

The interstices between the tows may comprise filaments. The interstices may comprise filaments of a single tow or filaments of tows on either side of the interstices. The interstices containing tow filaments form an integral structure of the moulding material or structure so that this can be handled, rolled up and/or stored without distortion of the fiber orientation and resin to fiber volume ratio and/or weight ratio. This ensures that the material is stable as opposed to the materials which are conventionally known.

In the disclosure, the resin may be provided on the first side of the fibrous reinforcement and at least partially penetrates the interstices between the tows of the fibrous reinforcement to leave the interior of the tows at least partially resin free.

There is disclosed herein moulding material or structure comprising a layer of unidirectional fibrous reinforcement and a curable liquid resin wherein the fibrous reinforcement comprises a plurality of multifilament tows wherein resin is provided on the first side of the fibrous reinforcement and at least partially penetrates the interstices between the tows of the fibrous reinforcement and leaves the interior of the tows at least partially resin fee.

There is further disclosed herein a moulding material or structure comprising a layer of fibrous reinforcement and a curable liquid resin wherein the layer of fibrous reinforcement comprises a plurality of unidirectional multifilament tows wherein resin is provided on a first side of the layer of fibrous reinforcement and wherein the intersticies between the tows are at least partially impregnated with the resin and the resin no more than partially penetrates the interior of the individual tows and the second side of the layer of fibrous reinforcement is at least partially resin free.

In the disclosure, the fibrous web or scrim is adhered to the fibrous layer by light pressure, so that less than half the circumference of the web or scrim fibres are coated by resin. In another embodiment the moulding material or structure is provided with a supporting web or scrim on one or both sides of the structure.

In the disclosure, the fibrous web or scrim may be located in the interstices between tows. In a preferred embodiment the scrim is arranged on at least the first side of the layer of fibrous reinforcement whereby part of the scrim is in the intersticies between tows. The scrim in the interstices provides a venting path in the intralaminar and interlaminar directions.. This thus provides extraction of any entrapped air or other gaseous matter in the x,y and z direction of the material. This is advantageous when multiple layers of the moulding material form a laminate structure.

Another benefit is that the application of a single fibrous web or scrim results in a product which is essentially symmetrical. This allows the material to be applied irrespective of its orientation in relation to the lay-up. Another benefit of an essentially symmetrical material is that it can be applied from a roll or spool to a lay-up or laminate stack in consecutive forward and backward motions, whereas an asymmetrical material must be deposited on the forward motion only whilst the backward motion must then be used to restore the roll or spool to its original position. A lay-up or stack made with a symmetrical material can therefore be made more quickly and more efficiently.

The scrim or web is preferably wide-meshed and may be made of any suitable material, but thermoplastic yarns are preferred. The key requirement of the yarn material is that is has a melting point similar to or higher than the prepreg gelling temperature so that the scrim yarns do not melt during the curing process. Preferably, the difference between yarn melt point and the matrix gelling point should be at least 10 °C. Suitable materials for the scrim include polyester (76 - 1100 dtex) such as polyethylene terephthalate and polybutylene terephthalate and copolymers thereof, polyamide (110-700 dtex) such as nylon 6, nylon 66, nylon 11, and nylon 12, polyethersulphone, polypropylene, viscose staple yarn (143 - 1000 dtex), meta and para-amid (Kevlar 29 220-1100 dtex) and Nomex T-430 220-1300 dtex, glass 220-1360 dtex), jute (2000 dtex), flax (250-500 dtex), cotton (200-500 dtex) and combinations of one or more of these. Such material is available under the Bafatex tradename from Bellingroth GmbH.

The strands which form the scrim preferably have a substantially round cross-section. The diameters of the strands may be in the range of from 100 to 1000 micrometer, preferably 200 to 600 micrometer and more preferably from 300 to 400 micrometer. If the scrim fiber diameters are too large, then mechanical properties of the laminate may be adversely affected. For example, both interlaminar shear strength and compression strength were found to decrease.

An important aspect of the disclosure is that the strands of the scrim or web are not fully impregnated by the resin. This aids with the venting of interlaminar air between the prepreg layers. The degree by which the strands of the scrim are coated with resin can be expressed by the degree of impregnation (DI). The DI indicates to which degree the circumference of the scrim strands are covered with resin. Therefore, an impregnation index of 1.0 means that the strands are fully impregnated by the resin and an impregnation index of 0.5 indicates, that half of the circumference of the grid strands is coated by the resin. The disclosure requires that the scrim strands are covered with the prepreg resin to a minimum degree, just sufficient in order that the scrim will adhere to the prepreg to assure safe handling. It must not be covered by the resin, however, to 50% of the circumference of the strands or more, to assure the proper provision of air escape channels. Therefore, expressed as a "degree of impregnation", the invention requires that the degree of impregnation is between >0 and <0.5 and preferably between 0.2 and 0.3.

To assure that the outward ends of the air channels provided along the scrim strands do not become clogged by the prepreg resin, the scrim should extend outwardly beyond the edges of the prepreg. Preferably the scrim should jut out over the edges of the prepreg by 2 to 30, in particular by 10 to 20 mm.

In the disclosure, a scrim or web may be present on one or on both surfaces of the moulding material or structure.

A polyethylene or silicone coated release paper may be placed as a protector layer on one or both sides of the prepreg - scrim assembly.

The structure of the scrim is of importance and consists of two main elements. In the 0° or warp direction, the yarns are used to primarily stabilize those yarns that are aligned in other directions even when under tension in a wound-up roll. Other yarns, that run in a crosswise direction to the warp yarns form parallelograms. In general the grid forms a coarse net in which the parallel strands of the parallelogram have a distance of 3 to 60, preferably 10 to 35 and most preferably 20 to 30 mm from each other.

For the escape of the air the short channels to the lateral edges of the prepreg formed by the strands in roughly cross-direction are of importance. Preferably the scrim should include parallelograms with side lengths of 10 to 35 mm, wherein the smaller angle of the parallelogram is between 50° and 80°, preferably between 65° and 75°. Therefore the scrim preferably should comprise strands in longitudinal direction, which is the running direction of the sheet, and strands in roughly cross-direction to the running direction of the sheet. With such a scrim construction during the pressmolding of the prepreg lay-ups, also advancing in longitudinal direction, the air will first advance along the longitudinal strands up to a point, where the longitudinal strand meets a strand in cross-direction, from where the air will escape outwardly along a strand in cross-direction. These strands in cross-direction create a short way outwardly. In this connection, also the angle between the strands in longitudinal direction and the strands in roughly cross-direction is of practical importance.

In the disclosure, it is considered to provide a stack of such moulding materials or structures.

In the disclosure provides a process for the preparation of a prepreg or a semipreg comprising superimposing a curable liquid resin onto a layer of unidirectional fibrous reinforcement comprising a plurality of tows each comprising a plurality of parallel filaments to form a superimposed structure wherein the superimposed structure is compressed to the extent that the resin penetrates the interstices between the tows and penetrates the voids within the tows to less than 22 to 60 volume % of the tow volume, particularly from 22 to 55 volume%, more particularly from 22 to 50 volume%, preferably from 25 to 45 volume% and most preferably from 25 to 42 volume% or from 25 to 35% of the tow volume.

The moulding material or structure disclosed herein may be characterized by its resin content and/or its fiber volume and resin volume and/or its degree of impregnation as measured by the water up take test.

Resin and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume% of a prepreg moulding material or structure can be determined from the weight% of fibre and resin by dividing the weight% by the respective density of the resin and carbon fiber.

The % of impregnation of a tow or fibrous material which is impregnated with resin is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fiber orientation of the prepreg is extends along the protruding part. A clamp is placed on the opposite end, and 5 mm of the protruding part is immersed in water having a temperature of 23 °C, relative air humidity of 50% +/- 35%, and at an ambient temperature of 23 °C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

The same method can be conducted for individual tows - in that case, multiple tows (typically 25 up to 50) are located between the PTFE backed plates and they are treated in the same way by immersion in water, and the WPU% is then calculated for the tows by calculating the average values for W1 and W2 as outlined above.

Typically, the values for the resin content by weight for the uncured prepreg of the disclosure are in the ranges of from 15 to 70% by weight of the prepreg, from 18 to 68% by weight of the prepreg, from 20 to 65 % by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg and/or combinations of the aforesaid ranges.

Typically, the values for the resin content by volume for the uncured prepreg of the disclosure are in the ranges of from 15 to 70% by volume of the prepreg, from 18 to 68% by volume of the prepreg, from 20 to 65 % by volume of the prepreg, from 25 to 60% by volume of the prepreg, from 25 to 55% by volume of the prepreg, from 25 to 50% by volume of the prepreg, from 25 to 45% by volume of the prepreg, from 25 to 40% by volume of the prepreg, from 25 to 35% by volume of the prepreg, from 25 to 30% by volume of the prepreg, from 30 to 55% by volume of the prepreg, from 35 to 50% by volume of the prepreg and/or combinations of the aforesaid ranges.

Finally, the values for the resin content by volume for the uncured prepreg tows of the disclosure are in the ranges of from 15 to 70% by volume of the prepreg tow, from 18 to 68% by volume of the prepreg tow, from 20 to 65 % by volume of the prepreg tow, from 25 to 60% by volume of the prepreg tow, from 25 to 55% by volume of the prepreg tow, from 25 to 50% by volume of the prepreg tow, from 25 to 45% by volume of the prepreg tow, from 25 to 40% by volume of the prepreg tow, from 25 to 35% by volume of the prepreg tow, from 25 to 30% by volume of the prepreg tow, from 30 to 55% by volume of the prepreg tow, from 35 to 50% by volume of the prepreg tow and/or combinations of the aforesaid ranges. The values for the resin content by weight for the uncured prepreg tows of the invention are in the ranges of from 15 to 70% by weight of the prepreg tow, from 18 to 68% by weight of the prepreg tow, from 20 to 65 % by weight of the prepreg tow, from 25 to 60% by weight of the prepreg tow, from 25 to 55% by weight of the prepreg tow, from 25 to 50% by weight of the prepreg tow, from 25 to 45% by weight of the prepreg tow, from 25 to 40% by weight of the prepreg tow, from 25 to 35% by weight of the prepreg tow, from 25 to 30% by weight of the prepreg tow, from 30 to 55% by weight of the prepreg tow, from 35 to 50% by weight of the prepreg tow and/or combinations of the aforesaid ranges

Water pick up values for the uncured prepreg moulding material and tows of the disclosure may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges.

The present disclosure provides a process wherein a layer of unidirectional fibrous tows which are fully impregnated with liquid resin is superimposed on a layer of dry unimpregnated unidirectional fibrous tows and the structure consolidated so that the resin penetrates the spaces between the unimpregnated tows but leaves the spaces between the filaments within the tows at least partially unimpregnated. A supporting web or scrim may be provided on one or both sides of the structure preferably before consolidation.

The term prepreg or semipreg is used herein to describe a moulding material or structure in which the fibrous material has been impregnated with the liquid resin to the desired degree and the liquid resin is substantially uncured.

The tows employed in the present disclosure are made up of a plurality of individual filaments. There may be many thousands of individual filaments in a single tow. The tow and the filaments within the tow are generally unidirectional with the individual filaments aligned substantially parallel. In the disclosure, the tows within the moulding material or structure of the invention are substantially parallel to each other and extend along the direction of travel employed for the processing of the structure. Typically the number of filaments in a tow can range from 2,500 to 10,000 to 50,000 or greater. Tows of about 25,000 carbon filaments are available from Toray and tows of about 50,000 carbon filaments are available from Zoltek.

Leaving the interior of the tows at least partially resin free provides an air venting path or structure, so that air that may be present in the tows from the outset or that may be introduced during impregnation with the liquid resin is not trapped within the structure by the resin and can escape during preparation and consolidation of the prepreg. The air is able to escape along the length of the tows and also from the second side of the fibrous layer if the impregnation by the resin is such that some or all of the surface of the second side of the fibrous layer is not carrying resin. Furthermore, the provision of the spaces between the filaments of the tows will allow air trapped between the prepregs during stack formation to escape particularly if, in addition, one side of the prepreg is not entirely coated with resin.

The prepregs of this disclosure may be produced from normally available epoxy resins which may contain a hardener and optionally an accelerator. In a preferred embodiment the epoxy resin is free of a traditional hardener such as dicyandiamide and in particular we have found that these desirable prepregs can be obtained by use of a urea based or urea derived curing agent in the absence of a hardener such as dicyandiamide. The relative amount of the curing agent and the epoxy resin that should be used will depend upon the reactivity of the resin and the nature and quantity of the fibrous reinforcement in the prepreg. Typically from 0.5 to 10 wt % of the urea based or urea derived curing agent based on the weight of epoxy resin is used.

The laminates produced from the prepregs of this disclosure can contain less than 3 % by volume of voids, or less than 1 % by volume of voids, typically less than 0.5 % by volume and particularly less than 0.1 % by volume, more particularly less than 0.07% by volume based on the total volume of the laminate as measured by microscopic analysis of 20 spaced cross sections measuring 30 x 40 mm in cross section (spacing 5 cm) of a cured sample of the laminate. The cross section is polished and analysed under a microscope over a viewing angle of 4.5 to 3.5 mm to determine the surface area of the voids in relation to the total surface area of each cross section of the sample and these measurements are averaged for the number of cross sections. This method for determining the void fraction is used within the context of this application, although alternative, standardized methods are available such as DIN EN 2564. These methods are however expected to provide comparative results in relation to the microscopic analysis as outlined here. Also, the maximum size of the voids is assessed in each viewing angle section and this number is averaged over the 20 samples. The average surface area of the voids is taken as the value of the void content by volume. We have found that void fractions or levels as low as no more than 0.06% and 0.01% by volume have been achieved.

The prepregs of this disclosure are typically used at a different location from where they are manufactured and they therefore require handleability. It is therefore preferred that they are dry or as dry as possible and have low surface tack. It is therefore preferred to use high viscosity liquid curable resins. The invention has the additional added benefit that the prepregs of the invention have improved storage stability when compared with fully impregnated prepregs.

The prepreg is preferably provided with one or more backing sheets to facilitate handling of the material and/or rolling up of the material. The backing sheet may comprise a polyolefin based material such as polyethylene, polypropylene and/or copolymers thereof. The backing sheet may comprise embossing. This has the advantage of providing the prepreg with an air venting surface structure. The air venting surface structure comprising embossed channels which allow air to escape during processing. This is particularly useful as this prevents interply entrapment as interply air is effectively removed via the air venting surface channels.

In order to produce final laminates with substantially uniform mechanical properties it is important that the structural fibres and the epoxy resin be mixed to provide a substantially homogenous prepreg. This requires uniform distribution of the structural fibres within the prepreg to provide a substantially continuous matrix of the resin surrounding the fibrous tows whilst leaving the interstices within the tows at least partially resin free. The preferred prepregs of this invention contain a low level of voids between the tows. It is therefore preferred that each uncured prepreg and the prepreg stack has a water pick-up value of between 15 % to 30%, preferably between 16 to 26% and/or combinations of the aforesaid values. The water pick-up test determines the degree of waterproofing or impregnation between the unidirectional tows of the prepregs of this invention and is determined as hereinbefore described.

The prepregs of this disclosure are intended to be laid-up with other composite materials (e.g. other prepregs which may also be according to this disclosure or they may be other prepregs) to produce a curable laminate or a prepreg stack. The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The prepregs of this disclosure are produced by impregnating the fibrous material with the epoxy resin. The viscosity of the resin and the conditions employed for impregnation are selected to enable the desired degree of impregnation. It is preferred that during impregnation the resin has a viscosity of from 0.1 Pa.s to 100 Pa.s, preferably from 6 to 100 Pa.s, more preferably fromy 18 to 80 Pa.s and even more preferably from 20 to 50 Pa.s. In order to increase the rate of impregnation, the process may be carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 110°C more preferably 60°C to 80°C. It is preferred that the resin content of the prepregs is such that after curing the structure contains from 30 to 40 wt %, preferably 31 to 37 wt % more preferably 32 to 35 wt % of the resin. The relative amount of resin and multifilament tow, the impregnation line speed the viscosity of the resin and the density of the multifilament tows should be correlated to achieve the desired degree of impregnation between the tows and to leave spaces between the individual filaments within the tows which are unoccupied by the resin.

The resin can be spread onto the external surface of a roller and coated onto a paper or other backing material to produce a layer of curable resin. The resin composition can then be brought into contact with the multifilament tows for impregnation perhaps by the passage through rollers. The resin may be present on one or two sheets of backing material, which are brought into contact with one or both sides of the tows and consolidated such as by passing them through heated consolidation rollers to cause the desired degree of impregnation. Alternatively, the resin may be applied via a resin bath by conducting the tows through the resin (direct fibre impregnation). The resin may also comprise a solvent which is evaporated following impregnation of the fibre tows.

In the impregnation processes the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The fibre tows may then be placed into the resin and optionally a second resin layer may be provided on top of the fibre tows and then consolidated.

In the disclosure, a resin impregnated fibrous layer may be superimposed on a substantially resin free layer of unidirectional tows and the combination pressed together so that the resin from the impregnated layer passes into the resin free layer so that the resin enters between the tows but leaves at least part of the interstices within the tows at least partially resin free.

In this disclosure a layer comprising unidirectional fibre tows with a high degree of impregnation by liquid resin can be superimposed on a layer of substantially unimpregnated unidirectional fibre tows and the structure consolidated so that the liquid resin passes from the impregnated layer into the substantially unimpregnated layer to cause partial impregnation. Partial impregnation results in resin between the tows and leaving spaces between the filaments of the tows which do not contain resin. The partial impregnation may be such that the side of the layer of substantially unimpregnated tows remote from the resin containing layer remains dry or partially dry. Alternatively it may be wetted according to the moulding conditions to be employed for curing a stack of the prepregs.

A backing sheet can be applied either before or after impregnation of the resin. However, it is typically applied before or during impregnation as it can provide a non-stick surface upon which to apply the pressure required for causing the resin to impregnate the fibrous layer.

The epoxy resin used in the preparation of the prepreg preferably has an Epoxy Equivalent Weight (EEW) in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The epoxy resin composition preferably also comprises one or more urea based curing agents and it is preferred to use from 0.5 to 10 wt % based on the weight of the epoxy resin of a curing agent, more preferably 1 to 8 wt %, more preferably 2 to 8 wt %. Preferred urea based materials are the range of materials available under the commercial name Urone^{®}. In addition to a curing agent, a suitable accelerator such as a latent amine-based curing agent, such as dicyanopolyamide (DICY).

Accordingly, there is disclosed herein a prepreg moulding material for manufacturing a fibre-reinforced composite material, the prepreg comprising a layer of fibrous reinforcement fully impregnated by a matrix resin material, wherein the resin material has a storage modulus G' of from 3 x 10⁶ Pa to 1 x 10⁸ Pa and a loss modulus G" of from 2 x 10 ⁶ Pa to 1 x 10 ⁸ Pa.

Preferably, the resin material has a storage modulus G' of from 1 x 10⁶ Pa to 1 x 10⁷ Pa, more preferably from 2 x 10⁶ Pa to 4 x 10⁶ Pa.

Preferably, the resin material has a loss modulus G" of from 5 x 10⁶ Pa to 1 x 10⁷ Pa, more preferably from 7 x 10⁶ Pa to 9 x 10⁶ Pa.

Preferably, the resin material has a complex viscosity of from 5 x 10⁶ Pa to 1 x 10 ⁷ Pa.s, more preferably from 7.5 x 10⁶ Pa to 5 × 10⁶ Pa.s.

Preferably, the resin material has a complex viscosity of from 1 x 10⁶ Pa to 2 x 10⁶ Pa.s.
more preferably from 5 to 30 Pa.s at 80 ° C. Preferably, the resin material has a viscosity of from 10 to 25 Pa.s at 80 °C. Preferably, the resin material is an epoxy resin.

We have discovered that the aforesaid storage modulus and loss modulus properties allow the air venting structure to remain in place during handling, storage and lay up of the prepreg moulding material or structure up to the start of processing when the laminate stack is heated up to temperatures over 40 °C and a vacuum pressure is applied, even if multiple plies (stacks of 20, 30, 40, 60 or even more plies) are laid up.

Preferably, the prepreg moulding material is elongate in a longitudinal direction thereof and the fibrous reinforcement is unidirectional along the longitudinal direction of the prepreg.

Preferably, the opposed major surfaces of the prepreg moulding material or structure are embossed with an array of channels therein.

The behaviour of thermosetting pre-preg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G* is derived as the comlex oscillation which is applied to the material is known (Principles of Polymerization, John Wiley & Sons, New York, 1981).

In viscoelastic materials the stress and strain will be out of phase by an angle delta. The individual contributions making the complex viscosity are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" = 0 and the phase angle detla is 0°, and for a purely viscous liquid, G'=0 and the phase angle delta is 90°.

The loss modulus G" indicates the irreversible flow behaviour and a material with a high loss modulus G" is also desirable to prevent the early creep-like flow and maintain an open air path for longer. Therefore the resin used in the prepregs of the present invention has a high storage modulus and a high loss modulus, and correspondingly a high complex modulus, at a temperature corresponding to a typical lay-up temperature, such as room temperature (20 °C).

The resin material preferably has a phase angle delta such that the value of delta increases by at least 25 °C over a temperature range of from 10 to 25 °C. Optionally, the value of the phase angle delta increases by a value of from 25 to 70 °C over a temperature range of from 10 to 25 °C. Optionally, the value of the phase angle delta between the complex modulus G* and the storage modulus G' increases by a value of from 35 to 65 °C over a temperature range of from 10 to 25 °C. Optionally, the value of the phase angle delta is no more than 70° and/or at least 50 degrees at at least a value of within the temperature range of from 12.5 to 25 °C.

In this specification, the viscoelastic properties, i.e. the storage modulus, loss modulus and complex viscosity, of the resin used in the prepregs of the present invention were* measured at application temperature (i.e. a lay-up temperature of 20° C) by using a TA Instruments AR2000 rheometer with disposable 25mm diameter aluminium plates. The measurements were carried out with the following settings: an oscillation test at decreasing temperature reducing from 40 °C down to -10 °C at 2 °C/mm with a controlled displacement of 1 x 10⁻⁴ rads at a frequency of 1 Hz and a gap of 1000 micrometer.

Typically, the stiffness of the viscoelastic prepreg is characterised by the resin exhibiting a high elastic rheological response. The resin rheology is characterised by a storage modulus G' of the resin, preferably between 3 x 10 ⁵ Pa and 1 x 10 ⁸ Pa at 20 °C, more preferably from 1 × 10 ⁶ Pa to 1 × 10 ⁷ Pa, yet more preferably from 2 × 10⁶ Pa to 4 × 10 ⁶ Pa. The higher the storage modulus at room temperature, the greater the air transport properties of the prepreg stack. However, the upper limit of the storage modulus is limited because otherwise the pre-preg would become too rigid and would develop a tendency to snap as the prepreg is being laminated even onto the gentle curvature typical in a wind turbine spar.

In the manufacture of a structural member in the form of a spar or beam using the prepreg moulding material or structure of the present invention, preferably the resin has a high loss modulus G" between 2 x 10 ⁶ Pa and 1 x 10 ⁸ Pa at 20 °C, more preferably from 5 × 10⁶ Pa to 1 x 10 ⁷ Pa, yet more preferably from 7 x 10 ⁶ Pa to 9 x 10⁶ Pa.

The resin material preferably has a high complex viscosity at 20 °C of from 5 x 10⁶ Pa to 1 x 10⁷ Pa.s, more preferably from 7.5 x 10 ⁵ Pa to 5 x 10 ⁶ Pa.s, yet more preferably from 1 x 10 ⁶ Pa to 2 x 10 ⁶ Pa.s.

Furthermore, as stated above the viscosity of the resin in the moulding material is relatively high. This provides that prior to the curing stage, which is typically carried out an elevated temperature, for example at a temperature greater than 75 °C, a typical curing temperature being 80 °C or higher, the resin exhibits low or even negligible flow properties. The resin material preferably has a viscosity of from 5 to 30 Pa.s at 80 °C, more preferably from 10 to 25 Pa.s at 80 °C. V In this specification, the resin flow viscosity during the cure cycle was measured using a TA Instruments AR2000 rheometer with disposable 25mm diameter aluminium plates. The measurement was carried out with the following settings: increasing temperature from 30 to 130 °C 2 °C/mm with a shear stress of 3.259Pa, gap: 1000 micrometer.

The term interstices as used in this application to define the space or volume which is present between adjacent tows. This space or volume may comprise filaments of one or more adjacent tows. The space or volume may be filled when the fibrous material is impregnated, either partly or completely.

It is often thought that interstices are important to allow venting of entrapped interlaminar or intralaminar air from laminate mouldings. Surprisingly, we have discovered that the interstices may be filled with resin, while the tows themselves, when not fully impregnated as confirmed by for example the water pick up measurements, allow the venting of both interlaminar and intralaminar air. This results in moulding materials which have a very low void content as confirmed by the experiments in this application.

Furthermore, we have discovered that for the resin properties as defined herein, the moulding material of the invention is very stable during manufacture, storage, handling and lay-up so that the venting structure in the tows (and through embossing by a backing sheet) can remain in place up until an advanced stage during processing of the laminate stack when the temperature is raised typically to values above 60 °C.

The multifilament tows used in this disclosure may comprise cracked (i.e. stretch-broken), selectively discontinuous or continuous filaments. The filaments may be made from a wide variety of materials, such as carbon, basaltic fibre, graphite, glass, metalized polymers, aramid and mixtures thereof. Glass and carbon fibres tows are preferred carbon fibre tows, being preferred for wind turbine shells of length above 40 metres such as from 50 to 60 metres. The structural fibres are individual tows made up of a multiplicity of unidirectional individual fibres. Typically the fibres will have a circular or almost circular cross-section with a diameter for carbon in the range of from 3 to 20 µm, preferably from 5 to 12 µm. For other fibres, including glass, the diameter may be in the range of from 3 to 600 µm, preferably from 10 to 100 µm. Different tows may be used in different prepregs according to the invention and different prepregs may be used together to produce a cured laminate according to the properties required of the cured laminate.

The reinforcing fibers may be synthetic or natural fibers or any other form of material or combination of materials that, combined with the resin composition of the invention, forms a composite product. The reinforcement web can either be provided via spools of fiber that are unwound or from a roll of textile. Exemplary fibers include glass, carbon, graphite, boron, ceramic and aramid. Preferred fibers are carbon and glass fibers. Hybrid or mixed fiber systems may also be envisaged. The use of cracked (i.e. stretch-broken) or selectively discontinuous fibers may be advantageous to facilitate lay-up of the product according to the invention and improve its capability of being shaped. Although a unidirectional fiber alignment is preferable, other forms may also be used. Typical textile forms include simple textile fabrics, knit fabrics, twill fabrics and satin weaves. It is also possible to envisage using non-woven or non-crimped fiber layers. The surface mass of fibers within the fibrous reinforcement is generally 80-4000 g/m², preferably 100-2500 g/m² , and especially preferably 150-2000 g/m². The number of carbon filaments per tow can vary from 3000 to 320,000, again preferably from 6,000 to 160,000 and most preferably from 12,000 to 48,000. For fiberglass reinforcements, fibers of 600-2400 tex are particularly adapted.

Exemplary layers of unidirectional fibrous tows are made from HexTow^{®} carbon fibres, which are available from Hexcel Corporation. Suitable HexTow^{®} carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

The tows of the prepregs will be impregnated with the epoxy resin so that the resin is present between the tows but does not fill the spaces between the individual filaments within the tows although some resin may pass into those spaces during impregnation. The impregnation may be controlled so that a first side of the layer of tows is wetted by the resin whereas the second side remains dry. Alternatively both sides can be wetted by resin providing the resin does not fill all the spaces between the individual filaments within the tows. The prepregs of the present disclosure are predominantly composed of resin and the multifilament tows.

A stack of prepregs for preparing cured laminates may contain more than 40 prepreg layers, typically more than 60 layers and at times more than 80 layers, some or all of which may be prepregs according to the present invention. One or more of the prepreg layers in the stack may be cured or precured to part process the resin in the prepreg layer. It is however preferred that all the prepregs are according to the disclosure. Typically the stack will have a thickness of from 1 cm. to 10 cm, preferably from 2 cm to 8 cm, more preferably from 3 to 6 cm.

Epoxy resins can become brittle upon curing and toughening materials can be included with the resin to impart durability although they may result in an undesirable increase in the viscosity of the resin. Alternatively as described in copending Application No. EP11195218.0 the toughening material may be supplied as a separate layer such as a veil.

Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6) and nylon 12 (PA12) and mixtures thereof are preferred.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Once prepared, the prepreg or prepreg stack is cured by exposure to an elevated temperature, and optionally elevated pressure, to produce a cured laminate. As discussed above, the prepregs of the present invention can provide excellent mechanical properties without requiring the high pressures encountered in an autoclave process.

Thus, in further aspect, the invention relates to a process of curing the thermosetting resin within a prepreg or prepreg stack as described herein, the process involving exposing the prepreg or prepreg stack to a temperature sufficient to induce curing of the thermosetting resin composition and is preferably carried out at a pressure of less than 3.0 bar absolute.

The curing process may be carried out at a pressure of less than 2.0 bar absolute, preferably less than 1 bar absolute. In a particularly preferred embodiment the pressure is less than atmospheric pressure. The curing process may be carried out at one or more temperatures in the range of from 80 to 200°C, for a time sufficient to cure of the thermosetting resin composition to the desired degree.

Curing at a pressure close to atmospheric pressure can be achieved by the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied.

Once cured, the prepreg or prepreg stack becomes a composite laminate, suitable for use in a structural application, for example an aerospace structure or a wind turbine blade.

Such composite laminates can comprise structural fibres at a level of from 45% to 75% by volume (fiber volume fraction), preferably from 55 % to 70 % by volume, more preferably from 58 % to 65 % by volume (DIN EN 2564 A).

The unique properties of the lightweight layers such as woven and non woven fibrous layers, and other similar structured thermoplastic polymer layers, used in this disclosure make it possible to cure the laminates using such layers in an out-of-autoclave process. This relatively low pressure and low cost curing process can be used because the damage tolerance (e.g. Compression After Impact - DAI) of the cured laminate is not substantially less than the damage tolerance achieved using the higher pressure and higher expense of an autoclave. In contrast, out-of-autoclave curing of laminates that have interleaf zones toughened with insoluble thermoplastic particles produces cured laminates that have damage tolerances that are significantly reduced.

The present disclosure has applicability in the production of a wide variety of materials. One particular use is in the production of wind turbine blades and spars. Typical wind turbine blades comprise two long shells which come together to form the outer surface of the blade and a supporting spar within the blade and which extends at least partially along the length of the blade. The shells and the spar may be produced by curing the prepregs or stacks of prepregs of the present disclosure.

The length and shape of the shells vary but the trend is to use longer blades (requiring longer shells) which in turn can require thicker shells and a special sequence of prepregs within the stack to be cured. This imposes special requirements on the materials from which they are prepared. Prepregs based on unidirectional multifilament carbon fibre tows are preferred for blades of length 30 metres or more particularly those of length 40 metres or more such as 45 to 65 metres. The length and shape of the shells may also lead to the use of different prepregs within the stack from which the shells are produced and may also lead to the use of different prepregs along the length of the shell. In view of their size and complexity the preferred process for the manufacture of wind energy components such as shells and spars is to provide the appropriate prepregs within a vacuum bag, which is placed in a mould and heated to the curing temperature. The bag may be evacuated before or after it is placed within the mould.

The reduction in the number of voids in the laminates is particularly useful in providing shells and/or spars and/or spar caps for wind turbine blades having uniform mechanical properties. Particularly spars and parts thereof are subjected to high loads. Any reduction in void content greatly improves the mechanical performance of these parts. This in turn allows the parts to be built at a reduced weight (for example by reducing the number of prepreg layers) in comparison to a similar part which would have a higher void content. Furthermore, in order to withstand the conditions to which wind turbine structures are subjected during use it is desirable that the cured prepregs from which the shells and spars are made have a high Tg and preferably a Tg greater than 90°C.

The invention will now be illustrated by reference to the accompanying drawings in which:
Figure 1 is a schematic illustration of a moulding material or structure disclosed herein;
Figure 2 is a schematic illustration of a moulding material or structure obtainable by a method disclosed herein;
Figure 3 is a schematic illustration of a process disclosed herein;
Figure 4 is a schematic illustration of a moulding material or structure obtainable according to an embodiment of the invention;
Figure 5 is a schematic illustration of a process according to an embodiment of the invention; and
Figure 6 is a schematic illustration of a stack or moulding material assembly obtainable according to another embodiment of the invention.

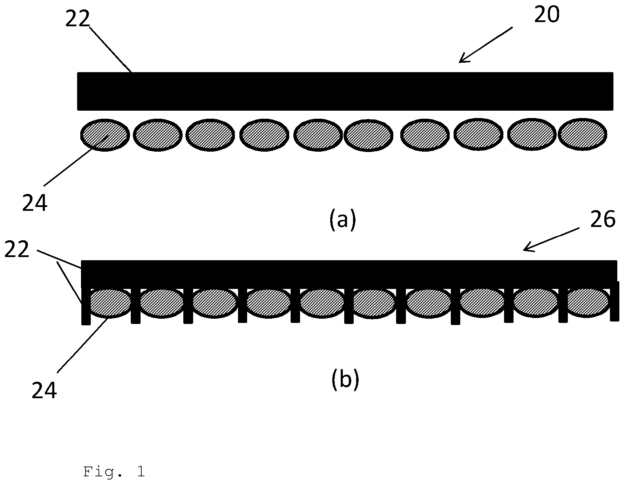

Figure 1 shows a moulding material or structure 20 comprising a layer of unidirectional fibrous reinforcement 24 and a curable liquid resin 22 wherein the fibrous reinforcement comprises a plurality of tows each tow comprising a plurality of filaments wherein resin is provided at least partially between interstices 22 of between tows of the fibrous reinforcement 24 to provide an air venting path in at least the interior of the tows.

The interior of the tows 24 is at least partially resin free. The interstices comprise both resin 22 and filaments of adjacent tows 24. The layer of fibrous reinforcement 24 comprises air venting tows at least partially embedded in at least partially impregnated fibrous reinforcement.

In Figure 1, the method of making this material is shown in (a) and (b). First, a resin layer 22 is brought into contact with the unidirectional fibrous reinforcement material 24 on one side.

The resin layer is pressed onto the reinforcement material 24 so that the resin at least partially penetrates the interstices between the tows of the fibrous reinforcement to leave the interior of the tows at least partially resin free. A porous fibrous scrim or web (not shown) may be subsequently tacked on one or both sides of the moulding material 20 whereby the scrim or web is substantially unimpregnated with resin to aid in the removal of both interlaminar and intralaminar air during processing of the moulding material when applied in a stack.

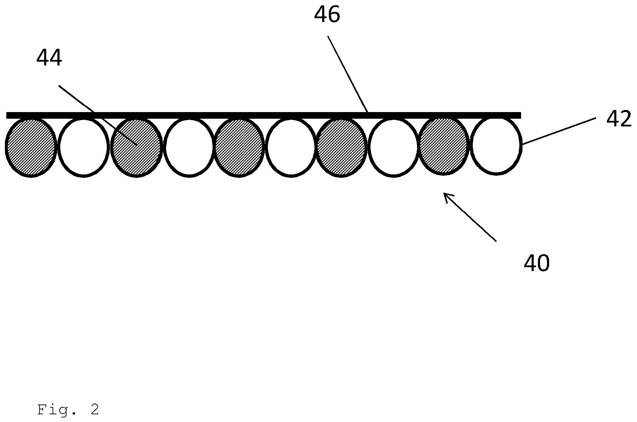

Figure 2 presents a moulding material obtainable by a process disclosed herein. This material 40 comprises a layer of fibrous reinforcement comprising unidirectional fibres 44,42 and a curable liquid resin wherein the fibrous reinforcement comprises a plurality of tows 44,42 each comprising a plurality of filaments wherein tows are substantially unimpregnated 42 or substantially impregnated 44 with resin, to form resin containing interstices between the tows 42,44. The interstices contain both resin and filaments of the impregnated 44 and uninmpregnated 42 tows. A porous fibrous scrim or web 46 is tacked on one sides of the moulding material 40 whereby the scrim or web 46 is substantially unimpregnated with resin to aid in the removal of both interlaminar and intralaminar air during processing of the moulding material 40 when applied in a stack.

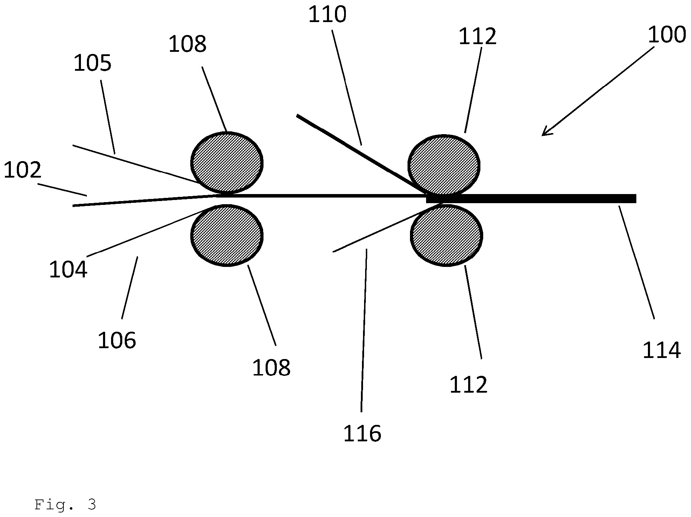

The material 40 is manufactured in accordance with the process 100 as shown in Figure 3. A layer of unimpregnated fibrous unidirectional reinforcement 102 is led between compression rollers 108. On either side of the reinforcement 102, a resin film 105,104 is provided so that the resin 104,105 is compressed into the fibrous reinforcement material to substantially fully impregnate the tows of the unidirectional fibrous reinforcement 102 ("wet tows"). In a subsequent stage, a layer of unimpregnated ("dry tows") fibrous unidirectional reinforcement 110 is led between compression rollers 112. The compression rollers press the dry fibrous unidirectional tows in between the fully impregnated tows so that a structure is produced in which dry tows sit amongst wet tows. As a result of the compression, the dry tows will become partly impregnated with resin so that resin containing interstices are formed between the tows. The interstices also contain filaments of adjacent tows. A scrim or web 116 as hereinbefore described is further applied to the material by compression rollers 112.

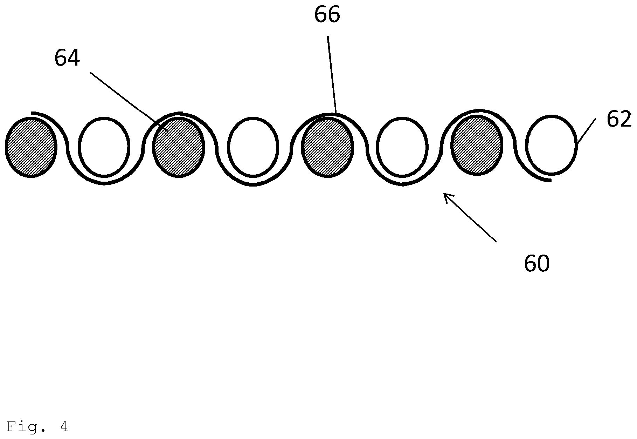

Figure 4 presents an embodiment of a moulding material or structure obtainable by a process according to the invention. This material 60 comprises a layer of fibrous reinforcement comprising unidirectional fibres 64, 62 and a curable liquid resin wherein the fibrous reinforcement comprises a plurality of tows 64,62 each comprising a plurality of filaments wherein tows are substantially unimpregnated 62 or substantially impregnated 64 with resin, to form resin containing interstices between the tows 62,64. The interstices contain both resin and filaments of the impregnated 64 and uninmpregnated 62 tows, and also contain the porous fibrous scrim or web 66, whereby the scrim is substantially unimpregnated with resin to aid in the removal of both interlaminar and intralaminar air during processing of the moulding material 60 when applied in a stack.

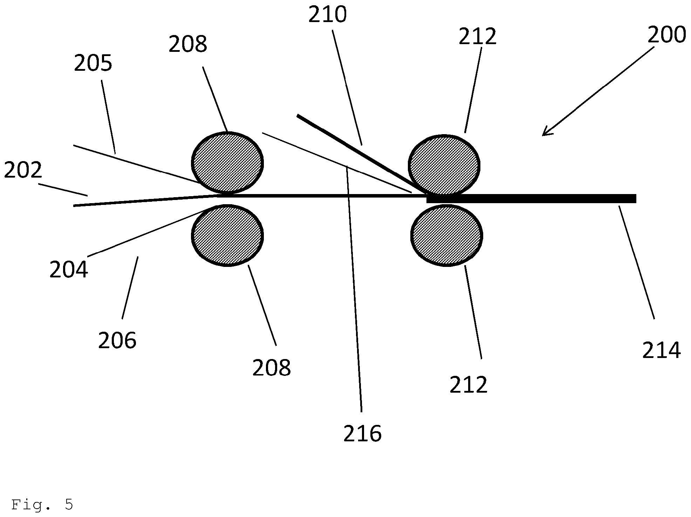

The material 60 is manufactured in accordance with the process 200 shown in Figure 5, which is a process in accordance with the present invention. A layer of unimpregnated fibrous unidirectional reinforcement 202 is led between compression rollers 208. On either side of the reinforcement 202, a resin film 205,204 is provided so that the resin 204,205 is compressed into the fibrous reinforcement material to substantially fully impregnate the tows of the unidirectional fibrous reinforcement 202 ("wet tows"). In a subsequent stage, a layer of unimpregnated ("dry tows") fibrous unidirectional reinforcement 210 is led between compression rollers 212. In addition, a scrim or web 216 as hereinbefore described is applied between the dry tows 210 and the wet tows. The compression rollers press the dry fibrous unidirectional tows and the scrim or web in between the fully impregnated tows so that a structure is produced in which dry tows sit amongst wet tows and whereby also scrim is present in the interstices which extends to the other surface of the material 60. As a result of the compression, the dry tows will become partly impregnated with resin so that resin containing interstices are formed between the tows. The interstices also contain filaments of adjacent tows.

The scrim aids venting of any interlaminar and/or intralaminar air in x, y directions (transverse and longitudinal directions) and z direction (cross ply direction). This embodiment also has the advantage that only one scrim is required to produce a symmetrical moulding material.

Suitable reinforcement materials for the embodiments as shown in Figures 1 to 5 are unidirectional fibrous reinforcement of 400 to 1000 gsm. A suitable resin material is M9.6 as supplied by Hexcel.

Trials were performed using a fibrous layer comprising unidirectional parallel tows of carbon fibres.

### Comparative Examples

Sixty plies of carbon unidirectional fabric (600 gsm, 50K filaments per tow) fully impregnated prepreg with a resin content of 34% by weight were laid up to form a cured laminate of a thickness of 35 mm. The matrix resin type was M9.6GF available from Hexcel, Pasching, Austria. The prepregs were fully impregnated by applying a resin film of the M9.6GF resin to each side of the unidirectional fibrous layer and by compressing this resin into the fibrous layer (2 film process). A comparative lay-up was prepared from the fully impregnated fabric as prepared above (2 film).

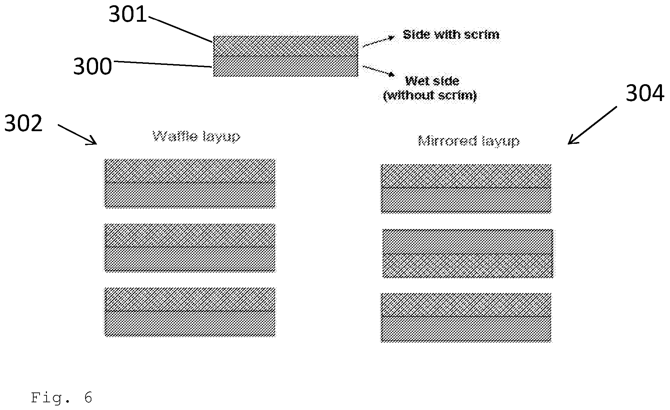

Other comparative lay-ups were prepared from the above prepreg with a thermoplastic polyamide scrim of weight 2 gsm (g/m²) as supplied by Bafatex GmbH present on one side of the prepreg (2 film, 1 scrim) and on both sides of the prepreg (2 film, 2 scrim). Each of the lay-ups had 60 prepreg plies. The lay-ups of the prepregs in the stacks were all "mirrored" as outlined in Figure 6, see 304. This means that subsequent ply prepregs were turned upside down in orientation in relation to the preceding prepreg ply in the lay up. In contrast, in a waffle lay up, each of the prepreg plies is applied in the same orientation, see 302.

The lay-up was subsequently pre-compacted and cured under vacuum at a pressure of 0.1 bar, then cut and tested for the presence of air voids. A two-step cure cycle was used in which the temperature was slowly increased to 85 °C over 2 hours 15 minutes and then held at 85 °C for a further 1.5 hours. This was followed by a further temperature ramp to 120 °C over 1.5 hours with a second temperature held at 120 °C for 1 hour. This was followed by cooling to 90 ⁰ C and preferably to below 60 ⁰C is desirable before removing the cured laminate from the mold.

Further comparative examples were prepared by making the material as a one film prepreg as shown in Figure 1 (a,b) as follows.

A prepreg moulding material of the disclosure was prepared by applying a resin film of the M9.6GF resin on one side of the same unidirectional fibrous layer (600 gsm carbon fiber - 50K filaments per tow) and by compressing this resin into the fibrous layer (1 film process) to form a product having resin in the interstices of the tows whilst maintaining air venting paths inside the tows. The one film prepreg also contained 34% resin by weight. In one embodiment no scrim was applied (1 film, no scrim). In other embodiments one scrim was applied on the "dry side" of the prepreg (1 film, scrim on dry side), one scrim was applied on the side on which the resin was applied (1 layer of film and a scrim on wet side), and two scrims were applied on each on side (1 film, 2 scrims). The scrims had the same properties as the scrims in the comparative examples (2 gsm, supplied by Bafatex).

The prepregs of the disclosure were laid up to form a 60 ply laminate moulding, whereby the plies were in mirrored lay up or in waffle lay up as defined above.

The laminate moulding stack was then processed in the same way as the comparative examples. The cured laminate stacks had a thickness of 35 mm.

Cuts were taken from the laminate stacks to measure average void content (%) and maximum void size (mm²) by taking 10 cuts of each laminate at spaced intervals, polishing the cuts and measuring the void content and void size under a microscope as described previously.

The laminates so produced were examined for void content and the results were as follows.

**Table 1. Void content and Maximum void size. Trials 1 to 9 comparative examples.**

| **Trial No.** | **Structure** | **Lay Up** | **Void Content %** | **Maximum Void Size mm²** |
|---|---|---|---|---|
| 1 | 1 film | Mirrored | 2.7 | 0.4 |
| | No scrim | | | |
| 2 | 1 film | Waffle | 1.3 | 0.2 |
| | No scrim | | | |
| 3 | 1 film | Mirrored | 2.2 | 1.1 |
| | Scrim on dry side | | | |
| 4 | 1 film | Mirrored | 0.6 | 0.2 |
| | Scrim on wet side | | | |
| 5 | 1 film | Waffle | 0.5 | 0.25 |
| | Scrim on dry side | | | |
| 6 | 1 film | Mirrored | 0.5 | 0.2 |
| | 2 scrim | | | |
| 7 | 2 film | Mirrored | 7.8 | 1.2 |
| | No scrim | | | |
| 8 | 2 film | Mirrored | 2.7 | 0.3 |
| | No scrim | | | |
| 9 | 2 film | Mirrored | 1.5 | 0.5 |
| | 2 scrim | | | |

Illustrative materials were prepared according to an illustrative process and a process according to the present invention by making the materials shown in Figures 2 and 4, by the processes illustrated in Figures 3 and 5 respectively. The material in Figure 2 as described above was produced by pressing dry fibrous unidirectional tows of a unidirectional carbon fiber containing 50K filaments per tow and having a dry weight of 600 g/m² in between fully impregnated tows of the same dry fibrous unidirectional tows using compression rollers so that a structure is produced in which dry tows sit amongst wet tows. The resin was again M9.6GF as supplied by Hexcel. As a result of the compression, the dry tows were partially impregnated with resin so that resin containing interstices are formed between the tows. A scrim (same polyamide scrim, weight 2 g/m² as supplied by Bafatex) was then adhered to the assembly of dry and impregnated tows by compressing a scrim layer onto the assembly using further compression rollers.

The material shown in Figure 4 was made using a similar process, and using the same materials, again using unidirectional tows of a unidirectional carbon fiber containing 50K filaments per tow and having a dry weight of 600 g/m², the same scrim material and the same resin M9.6GF. However, in this material the scrim was led through the first set of compression rollers between the fully impregnated and dry fibrous tows as illustrated in Figure 5 before the fully impregnated tows and dry fibrous tows were combined.

The illustrative materials were prepared with different percentages of dry fibres in relation to the total fibre content; these were with 50%, 33% and 25% dry fibre content, for the materials assembled in accordance with Figure 2 (scrim on one side of the assembly of dry and wet tows) and in accordance with Figure 4 (scrim between the assembly of dry and wet tows). Water pick up tests were performed on each of the samples to asses degree of impregnation, using the procedure described above.

**Table 2 Water pick up test for prepregs formed with different percentages of dry tows.**

| **% Dry Tows** | **Scrim on Surface (****Figure 2****) WPU / %** | **Scrim Between Tows (****Figure 4****) WPU / %** |
|---|---|---|
| 50 | 26.8 | 27.4 |
| 33 | 19.0 | 19.6 |
| 25 | 16.4 | 18.8 |

As is evident from Table 2, the tows have water pick up values of between 15 to 30%, which is indicative of the presence of individual filaments in the tows which remain free from resin. We believe that the presence of these filaments ensures that interlaminar and intralaminar air may be removed, thereby acting as an air removal structure or gas venting network, which in turn, results in cured composites having a reduced void content.

The prepegs described herein above were assembled into laminate stacks comprising 60 plies. The laminate stacks were then cured using the same method as for the comparative examples. Cuts were taken from the laminate stacks to measure average void content (%) by taking 10 cuts of each laminate at spaced intervals, polishing the cuts and measuring the void content under a microscope as described previously (Table 3).

**Table 3. Void content for laminate stacks with different percentages of dry tows**

| **% Dry Tows** | **Scrim on Surface (****Figure 2****) Void content / %** | **Scrim Between Tows (****Figure 4****) Void content / %** |
|---|---|---|
| 50 | 0.06 | 0.15 |
| 33 | 0.28 | 0.16 |
| 25 | 0.29 | 0.28 |

Table 3 illustrates the venting in the above examples is considerably improved when compared to the comparative examples. We believe this reduced void content is achieved through improved inter and intra-laminar venting. The improved venting is provided by resin free pathways within the tows and scrim.

There is thus disclosed a moulding material or structure or prepreg having a resin and a fibrous reinforcement, the fibrous reinforcement comprising tows, wherein resin is present between the tows whilst the interior of the tows provides a path for the venting of air during processing of the material or structure or prepreg.

## Claims

1. A process for the preparation of a prepreg comprising superimposing a layer of unidirectional fibrous reinforcement comprising a plurality of tows each comprising a plurality of parallel filaments onto a resin impregnated layer of unidirectional fibrous reinforcement comprising a plurality of tows each comprising a plurality of parallel filaments, which tows are either substantially unimpregnated (62) or substantially impregnated (64) with the resin so that there are resin containing interstices between the tows, the interstices containing both resin and filaments of the unimpregnated (64) and impregnated (62) tows, and also comprising a porous, fibrous scrim or web (66), wherein the scrim is substantially unimpregnated with resin;
the process comprising leading a layer of unimpregnated fibrous unidirectional reinforcement (202) having a resin film (205, 204) provided on either side between compression rollers (208), so that the resin (204, 205) is compressed into the fibrous reinforcement material (202) to substantially impregnate the tows of the unidirectional fibrous reinforcement (202); and in a subsequent stage superimposing a layer of unimpregnated fibrous unidirectional reinforcement (210) on the substantially fully impregnated unidirectional fibrous reinforcement material (202) with a scrim or web (216) applied between the layer of unimpregnated fibrous reinforcement (210) and the substantially fully impregnated unidirectional fibrous material (202), and leading the superimposed layers through compression rollers (212) to press the dry fibrous unidirectional tows (210) and the scrim or veil (216) between the fully impregnated tows (202), wherein the superimposed laminate of layers is compressed to the extent that the resin penetrates the interstices between the tows but penetrates the voids within the tows to less than 22 to 60% by volume of the tows.

2. A process according to Claim 1, wherein the resin has a viscosity in the range 6 to 100 Pa.s at a temperature of 60 °C or of 80 °C.

3. A process according to Claim 1 or Claim 2, wherein from 30 wt % to 40 wt % of resin is used based on the combined weight of fibrous reinforcement material and resin.

## Patentansprüche

1. Ein Verfahren zur Herstellung eines Prepregs, das das Legen einer Schicht einer unidirektionalen Faserverstärkung, die eine Vielzahl von Werggarnen beinhaltet, von denen jedes eine Vielzahl von parallelen Filamenten beinhaltet, auf eine harzimprägnierte Schicht einer unidirektionalen Faserverstärkung, die eine Vielzahl von Werggarnen beinhaltet, von denen jedes eine Vielzahl von parallelen Filamenten beinhaltet, beinhaltet,
welche Werggarne entweder im Wesentlichen nicht imprägniert (62) oder im Wesentlichen mit dem Harz imprägniert (64) sind, sodass es harzhaltige Zwischenräume zwischen den Werggarnen gibt, wobei die Zwischenräume sowohl Harz als auch Filamente der nicht imprägnierten (64) und imprägnierten (62) Werggarne enthalten und auch einen porösen, faserhaltigen Gitterstoff oder ein poröses, faserhaltiges Gewebe (66) beinhalten, wobei der Gitterstoff im Wesentlichen nicht mit Harz imprägniert ist;
wobei das Verfahren Folgendes beinhaltet: das Führen einer Schicht von nicht imprägnierter, unidirektionaler Faserverstärkung (202), die einen Harzfilm (205, 204) aufweist, der auf beiden Seiten zwischen Kompressionswalzen (208) bereitgestellt ist, sodass das Harz (204, 205) in das Faserverstärkungsmaterial (202) gedrückt wird, um die Werggarne der unidirektionalen Faserverstärkung (202) im Wesentlichen zu imprägnieren; und in einer anschließenden Phase Legen einer Schicht einer nicht imprägnierten, unidirektionalen Faserverstärkung (210) auf das im Wesentlichen vollständig imprägnierte unidirektionale Faserverstärkungsmaterial (202), wobei ein Gitterstoff oder Gewebe (216) zwischen der Schicht einer nicht imprägnierten Faserverstärkung (210) und dem im Wesentlichen vollständig imprägnierten, unidirektionalen Fasermaterial (202) aufgebracht ist, und Führen der aufeinandergelegten Schichten durch Kompressionswalzen (212), um die trockenen, faserhaltigen, unidirektionalen Werggarne (210) und den Gitterstoff oder die Glas-Oberflächenmatte (216) zwischen die vollständig imprägnierten Werggarne (202) zu drücken, wobei der aufeinandergelegte Schichtverbundstoff von Schichten derartig zusammengedrückt wird, dass das Harz die Zwischenräume zwischen den Werggarnen durchdringt, aber die Hohlräume innerhalb der Werggarne um weniger als 22 bis 60 Vol.-% der Werggarne durchdringt.

2. Verfahren gemäß Anspruch 1, wobei das Harz eine Viskosität in dem Bereich von 6 bis 100 Pa.s bei einer Temperatur von 60 °C oder von 80 °C aufweist.

3. Verfahren gemäß Anspruch 1 oder Anspruch 2, wobei zu 30 Gew.-% bis 40 Gew.-% Harz, bezogen auf das Gesamtgewicht von Faserverstärkungsmaterial und Harz, verwendet wird.

## Revendications

1. Un procédé pour la préparation d'un préimprégné comprenant la superposition d'une couche de renfort fibreux unidirectionnel comprenant une pluralité de brins comprenant chacun une pluralité de filaments parallèles sur une couche imprégnée de résine de renfort fibreux unidirectionnel comprenant une pluralité de brins comprenant chacun une pluralité de filaments parallèles,
lesquels brins sont soit substantiellement non imprégnés (62), soit substantiellement imprégnés (64), avec la résine de sorte qu'il y a des interstices contenant de la résine entre les brins, les interstices contenant à la fois de la résine et des filaments des brins non imprégnés (64) et imprégnés (62), et comprenant également une gaze ou toile (66) poreuse et fibreuse, où la gaze est substantiellement non imprégnée avec de la résine ; le procédé comprenant le fait de guider une couche de renfort fibreux (202) unidirectionnel non imprégné ayant un film de résine (205, 204) fourni de chaque côté entre des rouleaux de compression (208), de sorte que la résine (204, 205) est compressée dans le matériau de renfort fibreux (202) afin d'imprégner substantiellement les brins du renfort fibreux (202) unidirectionnel ; et à un stade subséquent, la superposition d'une couche de renfort fibreux unidirectionnel non imprégné (210) sur le matériau de renfort fibreux (202) unidirectionnel substantiellement entièrement imprégné, une gaze ou toile (216) étant appliquée entre la couche de renfort fibreux non imprégné (210) et le matériau fibreux (202) unidirectionnel substantiellement entièrement imprégné, et le fait de guider des couches superposées à travers des rouleaux de compression (212) afin de presser les brins unidirectionnels fibreux secs (210) et la gaze ou le voile (216) entre les brins entièrement imprégnés (202), où le stratifié de couches superposé est compressé à tel point que la résine pénètre dans les interstices entre les brins mais pénètre dans les vides à l'intérieur des brins jusqu'à moins de 22 à 60 % en volume des brins.

2. Un procédé selon la revendication 1, où la résine a une viscosité dans l'intervalle de 6 à 100 Pa.s à une température de 60 °C ou de 80 °C.

3. Un procédé selon la revendication 1 ou la revendication 2, où de 30 % en poids à 40 % en poids de résine est utilisé rapporté au poids combiné de matériau de renfort fibreux et de résine.
